Europäisches Patentamt

European Patent Office

Office européen des brevets

(19)

(11) Publication number: **0 216 766 B1**

(12) **EUROPEAN PATENT SPECIFICATION**
published in accordance with Art.
158(3) EPC

(45) Date of publication of patent specification: **08.05.91**    (51) Int. Cl.⁵: **F16L 55/16**, B29C 53/20

(21) Application number: **85902097.6**

(22) Date of filing: **15.05.85**

(86) International application number:
**PCT/GB85/00205**

(87) International publication number:
**WO 85/05431 (05.12.85 85/26)**

(54) **A PERMANENT CONFORMING PIPE FOR CONDUCTING FLUIDS AND THE LIKE AND METHOD FOR PRODUCING THE SAME.**

(30) Priority: **16.05.84 GB 8412413**
**08.06.84 GB 8414721**
**01.12.84 GB 8430387**

(43) Date of publication of application:
**08.04.87 Bulletin 87/15**

(45) Publication of the grant of the patent:
**08.05.91 Bulletin 91/19**

(84) Designated Contracting States:
**AT BE CH DE FR GB IT LI LU NL SE**

(56) References cited:
**FR-A- 2 431 914**
**US-A- 4 009 063**

(73) Proprietor: **Knowles, Albert Henry**
**Westbrook**
**Moniack Bridge by Kirkhill Inverness-shire**
**IV5 7PQ(GB)**

(72) Inventor: **Knowles, Albert Henry**
**Westbrook**
**Moniack Bridge by Kirkhill Inverness-shire**
**IV5 7PQ(GB)**

(74) Representative: **Allsop, John Rowland**
**Rowland Allsop & Co. Black Boy Yard 15**
**High Street**
**West Wycombe High Wycombe, Bucks. HP14**
**3AE(GB)**

## Description

The present invention relates to the formation of rigid structures particularly pipes for conducting fluids. The present invention is more particularly concerned with a pipe that can be easily stored in a non-rigid form, layed out or installed on a surface such that the pipe or panel conforms to topographical convolutions on the surface, and made rigid in situ such that the pipe or panel forms a permanent structure of preselected dimensions. Where pipe configuration is not desired, the invention futher relates to improved wall or panel surfaces and contours and rigidized in situ.

In GB-A-2002485 there is disclosed a rigid structure and a method of forming a rigid structure comprising filling the space between longitudinally extending inner and outer flexible co-extensive skins with a filler embedded in fibre therebetween, whereby the filler can be activated into a rigidised state to form the rigid structure, as stated in the preambles of claims 1 and 10.

Turning now to the important pipe or conduit application of the invention, pipline structures for conducting water, gas, oil and other fluids, especially structure of a diameter over six inches (15.24 cms), are generally made or rigid sections, having lenghts that are convenient for handling and which are connected to form a single long pipe. Pipes of this type, often made of metal, clay or concrete, are placed on the ground or other surface and retain the same generally cylindrical structure even under pressure from internally conducted fluids or outside pressure. Such pipes are generally of a uniform cylindrical shape requiring substantial ground contouring prior to the laying of the pipe to ensure even support along its length. Additionally, since the pipeline is made of short sections of linear pipe, a large number of fitting or joining members must be used both to extend the pipeline over the desired length and to provide for a non-linear pipeline that can avoid obstacles or contour with irregular supporting surfaces. Such joints or fittings cause additional expense and weakness of the pipeline at the joints, as well as providing only for a limited discrete non-linearity of the pipeline.

In addition, large diameter rigid pipes are bulky and expensive to transport. Since they are generally made individually by molds or castings and must be of a thickness and strength sufficient to support their own weight and allow both handling and installation without damage, they are also costly to produce.

Smaller bore pipes, such as those used for fire fighting equipment, and the like, are generally made of a flexible material, such as canvas or plastic materials, which can be folded and stored on a roll. In use, the flexible pipe is forced open to conform to a generally cylindrical shape by the pressure of the fluid being conducted. Additionally, since the pipe retains its flexible form during fluid conducting use, folding, squashing or kinking of the pipe with its attendant disruption of smooth fluid flow may result from a multiplicity of environmental or use circumstances.

The present invention in its application to pipe or conduit formation and useage, provides for a permanent surface-conforming pipe that may be used to conduct fluids, (such as water, gas, steam, oil, etc.) or to serve as a conduit as for wires or cables, or to reline the interior of a previously installed pipe used for like or related purposes. The instant pipe is constructed from an inner and an outer layer of flexible material surrounding a flexible reinforcing layer that is curable to create a rigid structurally supporting form for the pipe. The pipe, in its flexible form, may be readily stored, as on a roll, and may be installed by laying over a supporting surface. The flexibility of the pipe provides for self-adjustment of level and shape to allow the pipe to conform to surface contours, indulations or other irregularities. Once the pipe is layed in the desired pattern, it is forced open to conform to a generally cylindrical shape by the introduction of a pressurized fluid into the pipe, and the inner reinforcing layer is cured to rigidity, thus providing a permanent pipe for conducting fluids and the like that conforms to the desired pattern of the installation. Such a system is also useful to re-line existing pipes by drawing the flexible pipe through one or more installed rigid pipes, expanding the pipe to conform to the interior shape of the existing pipeline and curing the reinforcing layer to provide a new pipeline secured within the old pipeline without the expense and delay of removing the old pipeline system.

It is accordingly an object of the present invention to provide a novel method of and apparatus for providing a permanent conforming pipe or conduit structure for conducting fluids and the like that is not subject to the aforementioned limitations, but instead is capable of being easily stored and installed in long, non-rigid lengths over a supporting surface or inside pipes that have been previously installed and then rigidized in situ.

Another object is to provide a novel permanent conforming pipe that can be adapted during installation to a desired cylindrical or other configuration, such as to fit the interior of a previously installed conduit or passage.

A further object is to provide novel pipe sections that can be joined without additional costly fittings that weaken the overall pipeline structure.

In other applications of techniques underlying the invention, other structurally supporting surfaces than pipes, such as walls, panels or ceilings and the like that shield against fluids or the like, can be provided under the present invention and are caused to confrom to preselected surface contours and rigidized to resits the penetration of fluids and the like as by conducting the fluids in channels away from the surface; it being a further object of the invention to provide improved structures of these types, as well.

According to the invention there is provided a method of forming a rigid structure comprising filling the space between a pair or longitudinally extending flexible coextensive skins with a filler of the type that can be activated into a rigid state, adjusting the skins to a predetermined spacing relative to one another, characterised by arranging transversely extending reinforcing fibres between the skins, embedding the filler in the form of a powdered material in the fibres, one of said skins being permeable to an activator for activating the filler to rigidise the same.

According to the invention there is also provided a structure as defined in claim 10.

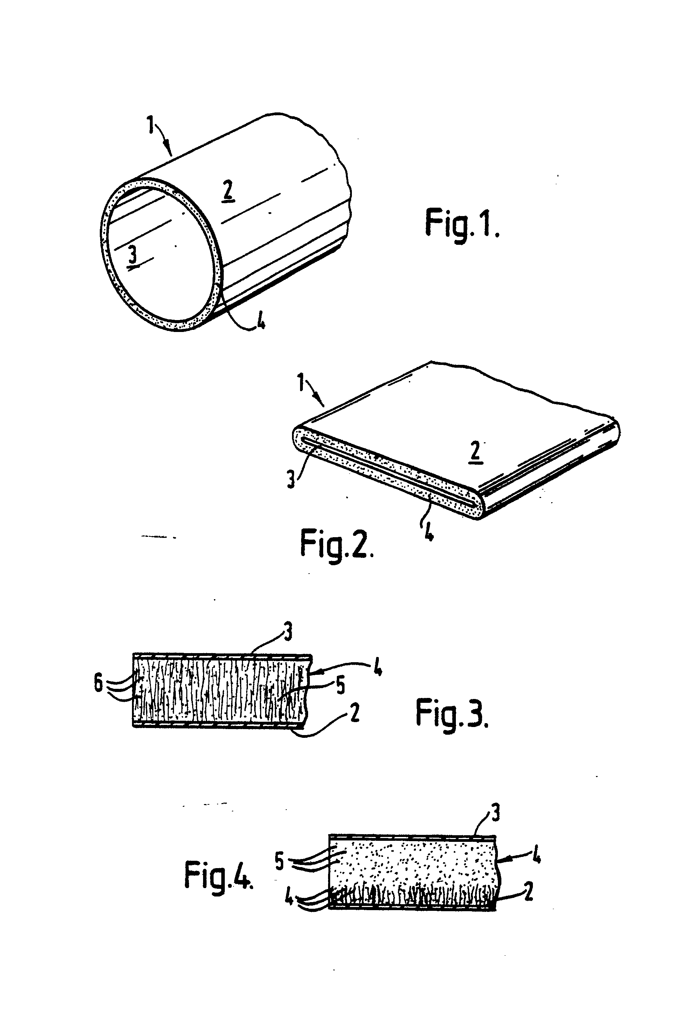

The invention will now be described with reference to the accompanying drawings, Figure 1 of which is a sectional view of a pipe structure constructed in accordance with a preferred form of the invention in an expanded circular cross-sectional cylindrical form;

Figure 2 is a similar view showing the pipe in its flat unexpanded form;

Figure 3 is an expanded sectional view of the wall of the permanent conforming structure showing an inner and outer layer surrounding a reinforcing layer;

Figure 4 is an expanded sectional view, similar to Figure 3, showing a second type of reinforcing layer;

Fig. 5 is a side elevation partially cut-away view of two pipes partially expanded and joined in accordance with a preferred form of the present invention;

Fig. 6 is an expanded side view of two pipes joined in an optional manner;

Fig. 7 is a partially cut-away side elevation of a pipe of the present invention installed on a surface re-lining an existing pipeline.

Fig. 8 is a partially cut away side elevation of a roof structure with corrugation convulutions corresponding to the support structure surface; and

Fig. 9 is a side elevation of a roof structure similar to Fig. 8 showing multiple conforming walls connected to form a single roof structure.

Referring now to Figs. 1 and 2, the pipe 1 of the present invention, is generally constructed of outer and inner spaced parallel skins or surfaces 2 and 3 having an immediate reinforcing layer 4 consisting of a filler in the form of a powdered material embedded in transversely extending reinforcing fibers (not shown), secured or sandwiched therebetween. The skins with the interior layer are transversely closed in oval or cylindrical cross section, such that they are coaxial and have an interior cavity or conduit. The reinforcing layer 4 should initially be flexible but ultimately curable to a structurally rigid form, as with the aid of the introduction of a catalyst into the layer 4. Such a reinforcing layer 4 may, for example, be of dry cement which, when filled between the surfaces 2 and 3 provides the structure 1 with its required flexibility for contouring or storage, but being adapted to be cured by the introduction of water as a catalyst into the cement to harden the layer 4 into a rigid structure of desired cross-sectional shape.

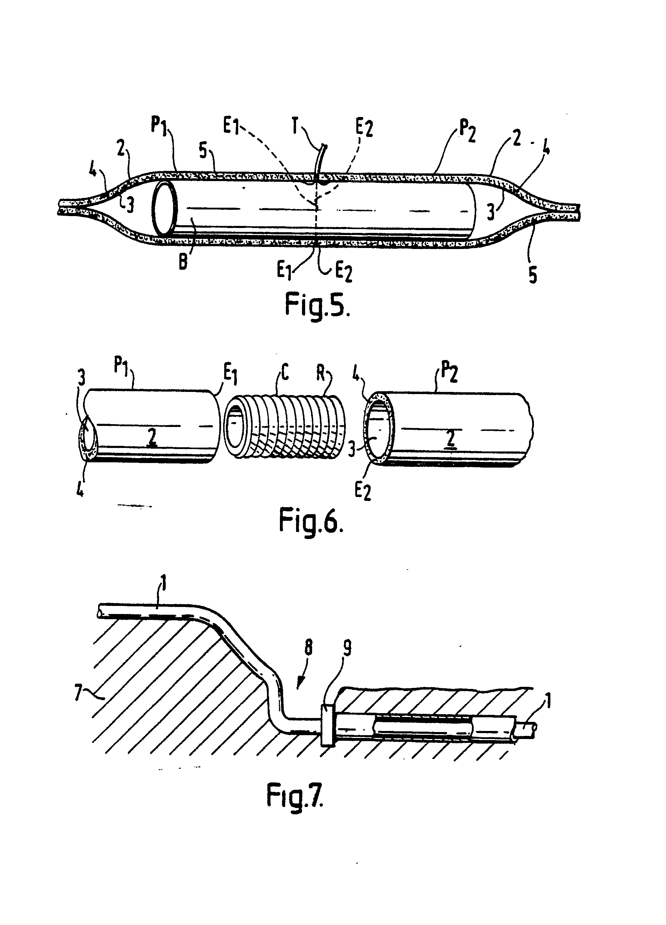

Suitable materials for the skin surfaces 2 and 3 for use in fabricating pipe, Fig. 1, as for conducting water or the like, are flexible plastic, rubber or canvas sheet material. The skins 2 and 3 must have sufficient tensile and shear properties to contain the reinforcing layer 4 without deleterious deformations, such as bulging or tearing, during storage or installation. Additionally, since the skins 2 and 3 provide the primary structural support of the pipe 1 prior to curing the reinforcing layer 4, they should have sufficient tensile strength to allow the pipe 1 to be pulled along a supporting surface without damage, as during the installation of the pipe 1 in a pre-constructed hole or for re-lining an existing pipe as will be described in more detail in reference to Fig. 7. The flat, flexible pipe of Fig. 2 allows easy storage, as on a spindle or roll, providing more pipe length to be stored in a limited area, and removes the imminent danger of breaking, chipping or other damage suffered in storage or transport by rigid ceramic or metal pipes, and the like, and also provides for easy installation over surfaces or as a liner for an existing pipe.

Either or both of the skin surfaces 2 and 3 are permeable to the fluid catalyst used to cure the interior reinforcing layer 4 to a rigid state, Fig. 1. Such a situation would exist, for example, with an outer skin surface 2 of rubber and an inner skin surface 3 of canvas, sandwiching a dry cement layer 4 therebetween. Introduction of water into the interior channel of the would-be pipe of Fig. 2 will expand or inflate the pipe and also will permeate the canvas inner surface 3 and cure the cement reinforcing layer 4 to structural rigidity. Thereafter further water or other fluids passing through the pipe 1, Fig. 1, will not react with the cement or canvas and will be effectively conducted by the pipe.

Referring now to Figs. 3 and 4, wherein like numerals designate like elements, the reinforcing layer 4 is constructed of cement 5 supported by the reinforcing fibers 6. The fibers 6 may be organic or inorganic and may be attached to either or both of the parallel skins 2 and 3 to facilitate stabilizing or retaining the cement 5 in place 3 while the structure is still flexible. Numerous methods of stabilizing the cement are contemplated, including a fibrous supporting structure; fibers 6 attached to one skin and extending a portion of the way through the cement 5, as shown in Fig. 4; and fibers 6 not attached to either skin surface 2 or 3 but extending essentially throughout the cement 5, as shown in Fig. 3, such as a fibrous-web mat imbedded in the cement.

A pipe 1 of the present invention may also be made to conduct water by using a rubber-backed carpet as the outer skin 2 with the fibers 6 of the carpet pointing upwardly. Powdered cement 5 would then be poured over the carpet fibers 6 and worked into the fibers 6 completely to surround the fibers 6. A top layer of water permeable material, such as canvas or sheet plastic having a plurality of small holes throughout, could be placed over the carpet fibers 6 and cement 5 to act as the inner skin surface wall 3. The construction would then be rolled, as over a mandril, to provide a circular cross-sectional shape, as shown in Fig. 1, and the matching ends of the inner and outer surfaces 3 and 4 would be secured, as by any non-water permeable adhesive means. As will be obvious to one skilled in the art, construction of a pipe 1 would also be easily accomplished with sheet materials spiraled about a mandril, allowing for any desired pipe lengths.

Storage of the water conducting pipe 1 of Fig. 2, for example, may be effected on a long spindle, allowing for minimal storage area. Installation would be accomplished over a surface by unrolling the spindle over the supporting surface, such that the flexible pipe conforms to the desired undulations or contours in the surface and can be flexibly directed along any desired path, as before mentioned. The pipe 1 would then be expanded to a preselected diameter, as by the introduction of water to and along the interior of the pipe 1.

Introduction of water to the pipe 1 serves two purposes. First, sufficient water pressure must be maintained to expand the pipe 1 from a flat state, as shown in Fig. 2, to a desired open cylindrical fluid conducting state, such as a circular cross-sectional form shown in Fig. 1, until the reinforcing layer 4 has become rigid and structurally self supporting. Secondly, the water intro-rigidity. After the cement 5 has fully cured, the water may be released and the pipe 1 will retain the permanent cylindrical shape of Fig. 1, distributed along the desired path layed-out during installation. As the cement 5, after curing, is also water-impermeable, the pipe 1 will be suitable for conducting water and other like fluids or for protectively surrounding cables and the like along the desired path.

Optionally, as when water is scarce, steam or other catalyst bearing gas or vapor may be introduced under pressure into the pipe 1 to expand the pipe 1 and cure the reinforcing layer 4. Also, a conductive-fluid impermeable inner surface 3 may necessitate a catalyst being introduced through the outer wall 2 skin surface such that the interior expanding fluid would not simultaneously cure the reinforcing layer 4 into rigidity but hold it in position for curing as a result of the external introduction of the rigidizing material or catalyst.

Although single lengths of pipe 1, being formable and storable in great lengths, may be sufficient to form any desired pipeline, joining of such pipes 1 may become necessary. Referring to Fig. 5, two such lengths of pipe $P_1$ and $P_2$ can be joined while in their flexible state and during the installation procedure. To join the pipes $P_1$ and $P_2$, they should be layed out with end edges $E_1$ and $E_2$ touching. This will require that the skins and sandwiched interior reinforcing layer of pipe $P_1$ contact the skins and reinforcing layer 4 of pipe $P_2$, respectively. A flexible cylindrical balloon B may then be inserted into the touching ends of pipes $P_1$ and $P_2$ such that half of the balloon B is in each of the pipes $P_1$ and $P_2$. The balloon B is then inflated, as through a tube T, to support the ends of the pipes $P_1$ and $P_2$ in an open cylindrical shape and the contacting reinforcing layers 4 are cured while the pipe $P_1$ and $P_2$ ends are so supported. With a water-permeable outer skin 2 and a cement 5 reinforcing layer 4, as previously described, introduction of water through the outer skin 2 would cure the cement 5 in each pipe $P_1$ and $P_2$ into a single rigid cylindrical structure. The outer wall may also be connected, as by a mastic or tape, and the balloon B deflated and flushed through the pipeline during use, or recovered in some other way. Finally, the hole remaining in the pipeline where the tube T extended between the edges $E_1$ and $E_2$ of the pipes $P_1$ and $P_2$ could be plugged, as with cement, providing a rapidly joined pipeline of two pipes $P_1$ and $P_2$ without weakened structural integrity. The remainder of the pipeline would be expanded or inflated and cured as previously described.

Fig. 6 shows an optional method of joining two such pipes $P_1$ and $P_2$. As described above for Fig. 5, the pipes $P_1$ and $P_2$ should be layed out with their edges $E_1$ and $E_2$ touching. A rigid connector C, such as a plastic cylinder having outer surface ridges R for frictionally engaging the inner skins 3 of the pipes $P_1$ and $P_2$ is inserted into the pipes $P_1$ and $P_2$. The connector C supports the ends of the pipes $P_1$ and $P_2$ in the desired open cylindrical shape and the pipes $P_1$ and $P_2$ may then be inflated and cured as previously described, the connecting reinforcing layers 4 at the edges $E_1$ and

$E_2$ curing to a single rigid structure as described above for Fig. 5. The pipes $P_1$ and $P_2$ may also be clamped, such as by a cylindrical clamp (not shown), to provide greater strength at the joint of the pipes $P_1$ and $P_2$, if desired.

Referring now to Fig. 7, and as previously mentioned, the pipe 1 can be installed to conform with supporting surface undulations or irregularities and to re-line existing pipelines. While in a flexible state, the pipe 1 is layed out over a supporting surface, such as soil 7 or in a hole or trench 8 cut in the soil 7. Such a trench 8 may be used to expose a section of previously installed pipe 9, or other housing, to allow re-lining of the existing pipe 9 with the pipe 1. As shown, the pipe 1 flexibly conforms to the surface irregularities, such as hills, bumps or trenches and can be inserted, as by pulling or pushing through an existing pipe 9 to re-line the pipe. Lubricants, such as soap, could be used on the outer surface of the pipe 1 to facilitate ease of insertion into the pipe 9.

After the pipe 1 is layed, it is then expanded to a desired shape, and cured with the outer skin surface of the pipe 1 preferably conforming to the shape of the inner wall or surface of the existing pipe 9. After curing the pipe 1 into rigidity, as previously described, the pipe 1 is structurally supported and the trench 8 can be filled without damage to the pipe 1.

Such a conforming pipe 1 for insertion into an existing pipe and easy connection to other conforming pipes, as explained previously, allows a long pipeline to be re-lined easily with only minimal excavation of the existing pipeline. Over a long existing pipeline small holes would need to be broken into the existing pipe, sufficient for a conforming pipe to be inserted therewithin. When conforming pipe can no longer be drawn through the existing pipe due to friction, a new hole will be opened into the existing pipe near the extreme end of the conforming pipe and a second conforming pipe inserted further into the existing pipe from the new hole. The two conforming pipes are then joined as previously described, and by such means and extended pipeline can be re-lined by the permanent conforming pipe of the present invention.

Other modifications include corrugating or waffling to reduce the weight of the pipe 1 and to stabilize or support the reinforcing layer 4 in its flexible state. Additionally, other cylindrical structures, such as rectangular, or tubular sewage tanks or cisterns, as well as sectional walls of partial cylindrical shape can be easily created under the present invention by proper construction of the walls and reinforcing layer and proper inflation to the desired shape. The term cylindrical, therefore, herein includes curvilinear walls having a radius of curvature and the term pipe includes any hollow shape constructed with curvilinear walls.

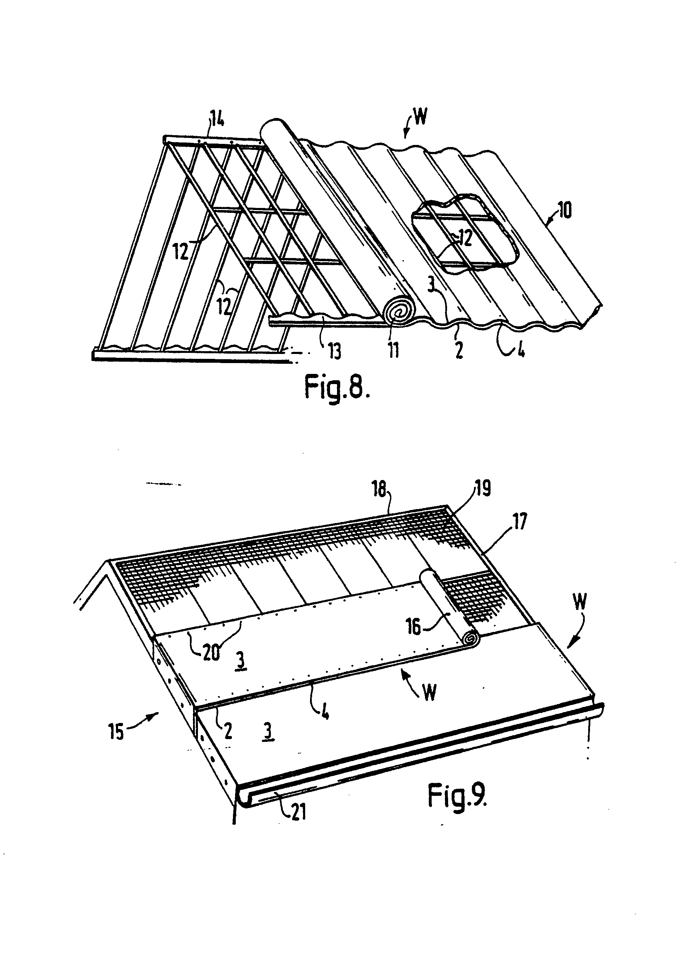

Turning, now, to non-expanded pipe applications, such as walls, roofs and similar surfaces, and referring to Fig. 8, a wall W such as a roof structure 10, can be installed as a sheet from a roll 11 over a supporting structure, such as reinforcing rods 12 attached to a scalloped support trim 13 and an apex support 14. The scalloped support trim 13 in conjunction with the reinforcing rods 12 providing a contoured support surface resulting in a corrugated roof structure 10. Providing a water-resistant upper skin in conjunction with the permanent corrugated structure provides a water-resistant roof structure 10 that has channels directing the water away from the roof, after appropriate curing. After curing, when the wall W has obtained structural rigidity, the wall W or roof 10 may be removed from the support structure to be used elsewhere where support structures are unavailable.

Alternatively, a water resistant wall or roof structure 15 can be constructed by a plurality of linear sheets which can be installed in rolled sheets 16 over a supporting structure 17, as seen in Fig. 9. The supporting structure is preferably a wood frame 18 with a fine-mesh wire grating 19 with sufficiently small holes to provide a nearly flat support structure. Installation of the wall W or roof 15 is accomplished by unrolling the roll 16 of the composite material, as described in Figs. 3 and 4, over the supporting structure 17. Attachment means, such as nails 20 secure the wall W material to the wood frame of the support structure 17 and, as the mesh grating 19 is sufficiently fine, provides a permanent smooth sheet wall or roof after appropriate curing. Multiple sheet walls may be overlapped, as shown, or connected edge to edge, with membrane 2 and 3 connection, to provide a single large permanent wall structure from several smaller flexible-state segments. Additional devices, such as a water channeling gutter 21, may be attached to and used in conjunction with the permanent roof or wall structure.

## Claims

1. A method of forming a rigid structure comprising filling the space between a pair of longitudinally extending flexible coextensive skins with a filler of the type that can be activated into a rigid state, adjusting the skins to a predetermined spacing relative to one another characterised by arranging transversely extending reinforcing fibres between the skins, embedding the filler in the form of a powdered material in the fibres, at least one of said skins being permeable to an activator for activating the filler to rigidise the same.

2. A method as claimed in claim 1 wherein said skins are coaxial, with the inner skin bounding a hollow interior coaxial space, said space being expanded to from a pipe of predermined cross section, while activating the filler to rigidise the pipe.

3. A method as claimed in claim 2 wherein said expanding is effected by introducing a fluid medium such as liquid and gas, into said space.

4. A method as claimed in claim 2 wherein said expanding is effected by introducing a fluid medium into said space, said medium including the activator.

5. A method as claimed in any preceding claim wherein the filler is dry cement and the activator is water.

6. A method as claimed in any preceding claim wherein the reinforcing fibres are bonded to one of the skins and extend therefrom to abut the other one of the skins so forming said reinforcing fibres between the skins.

7. A method as claimed in claim 6 wherein the filler is embedded in the bonded fibres prior to the said other one of the skins being positioned in place over said upwardly extending fibres.

8. A method as claimed in claim 2 wherein the filled flexible skins are positioned within an existing pipe, with the expansion and rigidising forming the said pipe of predetermined cross section therewithin.

9. A method as claimed in claim 2 wherein two sections of the filled flexible skins are abutted end to end prior to said rigidising.

10. A rigid structure comprising first and second longitudinally extending flexible coextensive skins, the space between said skins being filled with a filler, characterised in that the space between said skins comprises reinforcing fibres extending transversely between the skins, the filler being in the form of a powdered material activated to a rigid state embedded in the fibres thus rendering the structure rigid and fluid impervious, and in that at least one of said skins is permeable to the activator which activated the filler.

11. A rigid structure as claimed in claim 10 wherein the first and second skins are coaxial coextensive cylindrical skins, the rigid structure thus forming a pipe of predetermined cross section.

12. A rigid structure as claimed in claim 10 or 11 wherein the rigidised filler is water activated cement.

13. A rigid structure as claimed in claim 11 wherein the fibres are bonded to one of the skins and extend between the skins to abut the other one of the skins.

**Revendications**

1. Procédé de formation d'une structure rigide consistant à remplir l'espace séparant deux pellicules souples coextensives orientées longitudinalement d'une oharge d'un type qui peut être transformé dans un état rigide, l'ajustement des pellicules à un espacement prédéterminé l'une par rapport à l'autre, caractérisé par l'agencement de fibres de renforcement orientées transversalement entre les pellicules, l'enrobage des fibres par la charge sous la forme de matériau en poudre, une ou moins des pellicules étant perméable à un activateur permettant d'activer la charge pour la rendre rigide.

2. Procédé selon la revendication 1, dans lequel lesdites pellicules sont coaxiales, la pelicule intérieure délimitant un espace coaxial intérieur creux, ledit espace étant élargi à partir d'un tube de section transversale prédéterminée, au moment de l'activation de la charge pour rendre le tube rigide.

3. Procédé selon la revendication 2, dans lequel ladite expansion est effectuée en introduisant un milieu fluide tel qu'un liquide et un gaz dans ledit espace.

4. Procédé selon la revendication 2, dans lequel ladite expansion est effectuée en introduisant un milieu fluide dans ledit espace, ledit milieu comportant l'activateur.

5. Procédé selon l'une quelconque des revendications précédentes, dans lequel la charge est du ciment sec et l'activateur de l'eau.

6. Procédé selon l'une quelconque des revendications précédentes, dans lequel les fibres de renforcement sont fixées sur l'une des pelicules et se prolongent à partir de celles-ci pour venir en butée sur l'autre des pellicules de façon à former lesdites fibres de renforcement entre les pellicules.

7. Procédé selon la revendication 6, dans lequel la charge est enrobée dans les fibres fixées avant que ladite autre des pellicules soit mise en place au-dessus desdites fibres orientées vers le haut.

8. Procédé selon la revendication 2, dans lequel les pellicules souples garnies sont placées à l'intérieur d'un tube existant, l'expansion et la solidification formant ledit tube de section transversale prédéterminée à l'intérieur.

9. Procédé selon la revendication 2, dans lequel deux sections de pellicules souples remplies sont mises bout à bout avant ladite solidification.

10. Structure rigide comportant une première et une seconde pellicules souples coextensives orientées longitudinalement, l'espace entre lesdites pellicules étant rempli d'une charge, caractérisée en ce que l'espace entre lesdites pellicules comporte des fibres de renforcement orientées transversalement entre les pellicules, la charge étant sous la forme d'une matière en poudre qui est activée à un état rigide alors qu'elle est enrobée dans les fibres en rendant ainsi la structure rigide et imperméable aux fluides, et en ce qu'au moins une desdites pellicules est perméable à l'activateur qui active la charge.

11. Structure rigide selon la revendication 10, dans laquelle les premières et secondes pellicules sont des pellicules cylindriques coextensives, la structure rigide formant ainsi un tube de section transversale prédéterminée.

12. Structure rigide selon la revendication 10 ou 11, dans laquelle la charge solidifiée est constituée de ciment activé par l'eau.

13. Structure rigide selon la revendication 11 dans laquelle les fibres sont fixées à la première des pelicules et s'étendent entre les pellicules pour venir buter contre l'autre des pellicules.

## Ansprüche

1. Verfahren zum Formen einer starren bzw. steifen Struktur, bei dem der Raum zwischen einem Paar von sich in Längsrichtung erstrek-

kenden, in ihren Abmessungen angepaßten Schichten mit einem Füller eines Typs ausgefüllt wird, der in einen festen Zustand gebracht werden kann, wobei die Schichten in einen vorgegebenen Abstand relativ zueinander eingestellt werden, gekennzeichnet durch das Anordnen von quer verlaufenden Verstärkungsfasern zwischen den Schichten sowie durch das Einbetten des Füllers in Form eines pulverisierten bzw. pulverförmigen Materials in die Fasern, wobei wenigstens eine der erwähnten Schichten für einen Aktivator durchdringbar ist, der den Füller zur Verfestigung aktiviert.

2. Verfahren nach Anspruch 1, dadurch gekennzeichnet, daß die Schichten koaxial angeordnet sind, wobei die innere Schicht einen hohlen inneren koaxialen Raum begrenzt, der in Form eines Rohres mit vorgegebenem Querschnitt expandiert ist, während der Füller zum Verfestigen des Rohres aktiviert wird.

3. Verfahren nach Anspruch 2, dadurch gekennzeichnet, daß das Expandieren durch Einführen eines Strömungsmediums, beispielsweise einer Flüssigkeit oder eines Gases in den erwähnten Raum erfolgt.

4. Verfahren nach Anspruch 2, dadurch gekennzeichnet, daß das Expandieren durch Einführen eines Strömungsmediums in den erwähnten Raum erfolgt, welches (Strömungsmedium) den Aktivator aufweist.

5. Verfahren nach einem der vorhergehenden Ansprüche, dadurch gekennzeichnet, daß der Füller trockner Zement und der Aktivator Wasser sind.

6. Verfahren nach einem der vorhergehenden Ansprüche, dadurch gekennzeichnet, daß die Verstärkungsfasern an einer der Schichten befestigt sind und sich von dieser wegerstrecken, um die andere Schicht zu berühren, wodurch die erwähnten Verstärkungsfasern zwischen den Schichten gebildet sind.

7. Verfahren nach Anspruch 6, dadurch gekennzeichnet, daß der Füller in die befestigten Fasern eingebracht wird, bevor die andere der Schichten über den erwähnten, sich nach oben erstreckenden Fasern platziert wird.

8. Verfahren nach Anspruch 2, dadurch gekennzeichnet, daß gefüllte flexible Schichten innerhalb eines existierenden Rohres positioniert werden, wobei die Expansion sowie das Verfestigen das erwähnte Rohr mit dem vorgegebenen Querschnitt bilden.

9. Verfahren nach Anspruch 2, dadurch gekennzeichnet, daß zwei Abschnitte der gefüllten flexiblen Schichten jeweils vor dem Verfestigen Ende an Ende zur Anlage gebracht werden.

10. Starre bzw. steife Struktur bestehend aus ersten und zweiten, sich in Längsrichtung erstreckenden flexiblen und in den Abmessungen entsprechenden bzw. angeßaßten Schichten, wobei der Raum zwischen diesen Schichten mit einem Füller gefüllt ist, dadurch gekennzeichnet, daß der Raum zwischen den Schichten Versteifungsfasern aufweist, die sich quer zwischen den Schichten erstrecken, wobei der die Form eines pulverförmigen Materials aufweisende Füller in einen festen Zustand übergeführt und in den Fasern eingebettet ist und dadurch die Struktur fest bzw. steif sowie für Strömungsmittel undurchlässig macht, und daß wenigstens eine der Schichten für den Aktivator, der den Füller aktiviert, durchlässig ist.

11. Feste Struktur nach Anspruch 10, dadurch gekennzeichnet, daß die erste und zweite Schicht koaxiale, zylindrischen Schichten sind, und daß die feste Struktur somit ein Rohr mit einem vorgegebenen Querschnitt bildet.

12. Feste Struktur nach Anspruch 10 oder 11, dadurch gekennzeichnet, daß der verfestigte Füller ein durch Wasser aktivierbarer Zement ist.

13. Feste Struktur nach Anspruch 11, dadurch gekennzeichnet, daß die Fasern an einer der Schichten befestigt sind und sich zwischen den Schichten für eine Berührung der anderen der Schichten erstrecken.

Fig.1.

Fig.2.

Fig.3.

Fig.4.

Fig.5.

Fig.6.

Fig.7.

Fig.8.

Fig.9.